# EUROPEAN PATENT APPLICATION

(11) **EP 4 787 705 A1**
(43) Date of publication of application: **05.08.2026**
(21) Application number: 23954414.1
(22) Date of filing: 29.09.2023
(51) Int. Cl.: H02P 27/04

(54) **DEVICE FOR CONTROLLING ROTARY ELECTRIC MACHINE, AND METHOD FOR CONTROLLING ROTARY ELECTRIC MACHINE**

(71) Applicant: Astemo, Ltd., Chiyoda-ku, Tokyo 1000004 (JP)
(72) Inventor: NITTA, Takayuki, Hitachinaka-shi, Ibaraki 312-8503 (JP); SAITO, Yasuyuki, Hitachinaka-shi, Ibaraki 312-8503 (JP); KOBAYASHI, Yuji, Hitachinaka-shi, Ibaraki 312-8503 (JP); NAKADE, Tomoyuki, Hitachinaka-shi, Ibaraki 312-8503 (JP)
(74) Representative: MERH-IP Matias Erny Reichl Hoffmann Patentanwälte PartG mbB
(86) International application number: PCT/JP2023/035816
(87) International publication number: WO 2025/069449

(57) **Abstract**

A control device for a rotary electric machine for controlling an output torque of the rotary electric machine, includes: a flag setting unit for setting a limit flag indicating whether or not the output torque needs to be restricted; and a main control unit for controlling the output torque based on the limit flag, wherein the flag setting unit changes the limit flag to ON when a temperature of the rotary electric machine exceeds a limit temperature which is a temperature upper limit value set based on a rotation speed of the rotary electric machine, and wherein the flag setting unit changes the limit flag to OFF when the temperature of the rotary electric machine falls below a recovery temperature which is predetermined, and wherein the main control unit controls the output torque to be smaller in a case where the limit flag is ON than in a case where the limit flag is OFF.

## Description

### Technical Field

The present invention relates to a control device for a rotary electric machine, and control method for the rotary electric machine.

### Background Art

A rotary electric machine can convert electrical energy into rotational energy. This conversion inevitably generates losses, and a large energy conversion is accompanied by a large amount of heat generation. A temperature range in which a rotary electric machine operates normally is designed in advance, and the rotary electric machine is required to be controlled so as not to exceed this temperature. Patent Literature 1 discloses a motor control device including: a rotation speed detection unit that detects a rotation speed of a motor to be controlled; an output torque detection unit that detects an output torque of the motor; a control map that defines a torque limit temperature threshold value corresponding to a combination of the rotation speed of the motor and the output torque of the motor, the torque limit temperature threshold value corresponding to a temperature of a stator or a temperature of a rotor; a threshold value setting unit that sets the torque limit temperature threshold value in accordance with the control map based on the rotation speed detected by the rotation speed detection unit and the output torque detected by the output torque detection unit; a stator temperature detection unit that detects the temperature of the stator; a rotor temperature detection unit that detects the temperature of the rotor; a determination unit that determines whether or not the temperature of the stator detected by the stator temperature detection unit is equal to or higher than the torque limit temperature threshold value when the torque limit temperature threshold value set by the threshold value setting unit corresponds to the stator, and determines whether or not the temperature of the rotor detected by the rotor temperature detection unit is equal to or higher than the torque limit temperature threshold value when the torque limit temperature threshold value set by the threshold value setting unit corresponds to the temperature of the rotor; and a motor output limiting unit that limits an output of the motor when the determination unit determines that the temperature of the stator is equal to or higher than the torque limit temperature threshold value or when the determination unit determines that the temperature of the rotor is equal to or higher than the torque limit temperature threshold value.

### Citation List

### Patent Literature

Patent Literature 1: JP-A-2008-187862

### Summary of Invention

### Technical Problem

In the invention described in Patent Literature 1, there is room for improvement in the behavior when the operating point is changed.

### Solution to Problem

According to the 1st aspect of the present invention, a control device for a rotary electric machine for controlling an output torque of the rotary electric machine, includes: a flag setting unit for setting a limit flag indicating whether or not the output torque needs to be restricted; and a main control unit for controlling the output torque based on the limit flag, wherein the flag setting unit changes the limit flag to ON when a temperature of the rotary electric machine exceeds a limit temperature which is a temperature upper limit value set based on a rotation speed of the rotary electric machine, and wherein the flag setting unit changes the limit flag to OFF when the temperature of the rotary electric machine falls below a recovery temperature which is predetermined, and wherein the main control unit controls the output torque to be smaller in a case where the limit flag is ON than in a case where the limit flag is OFF.

According to the 2nd aspect of the present invention, a control method for a rotary electric machine for controlling an output torque of the rotary electric machine by a computer, includes: when a temperature of the rotary electric machine exceeds a limit temperature which is a temperature upper limit value set based on a rotational speed of the rotary electric machine, a limit flag indicating whether or not the output torque needs to be limited is changed to ON; and changing the limit flag to OFF when the temperature of the rotary electric machine falls below a predetermined recovery temperature; and controlling output torque of the rotary electric machine to be smaller in a case where the limit flag is ON than in a case where the limit flag is OFF.

### Advantageous Effects of the Invention

According to the present invention, it is possible to suppress unintended behavior of a vehicle when an operating point is changed.

### Brief Description of Drawings

[Fig. 1] FIG. 1 is a configuration diagram of a vehicle equipped with a control device.
[Fig. 2] FIG. 2 is a configuration diagram of a rotary electric machine.
[Fig. 3] FIG. 3 is a hardware configuration diagram of a control device.
[Fig. 4] FIG. 4 is a functional configuration diagram of a control device according to the first embodiment;
[Fig. 5] FIG. 5 is a diagram illustrating a relationship between a limit temperature and a recovery temperature;
[Fig. 6] FIG. 6 is a flowchart illustrating a process of a flag setting unit.
[Fig. 7] FIG. 7 is a diagram illustrating an operation example of a control device.
[Fig. 8] FIG. 8 is a diagram illustrating a relationship between a limit temperature and a comparative example recovery temperature in a comparative example.
[Fig. 9] FIG. 9 is a diagram illustrating an operation example in a comparative example.
[Fig. 10] FIG. 10 is a functional configuration diagram of a control device according to the second embodiment.
[Fig. 11] FIG. 11 is a diagram illustrating a setting screen of a recovery temperature.

### Description of Embodiments

### -First Embodiment-

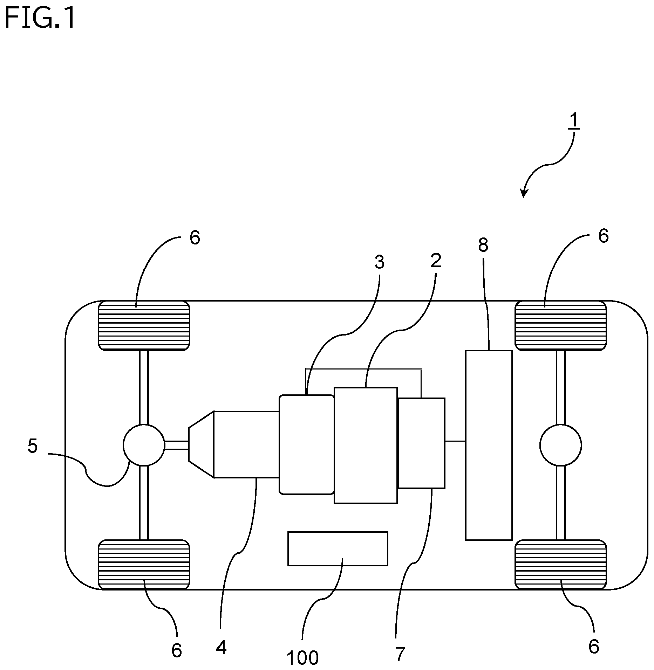

Hereinafter, a first embodiment of a rotary electric machine control device and a control method will be described with reference to FIGS. 1 to 9.

FIG. 1 is a configuration diagram of a vehicle 1 including a control device 100. Hereinafter, a person who gets in the vehicle 1 is referred to as a "user". The vehicle 1 includes an engine 2, a rotary electric machine 3, a transmission 4, a differential gear 5, a wheel 6, a power conversion device 7, a battery 8, and a control device 100. The engine 2 charges the battery 8 using a generator (not shown). The battery 8 stores mechanical energy generated by the engine 2 as electric energy. However, the battery 8 may be configured to be chargeable from the outside. The power conversion device 7 supplies an alternating current to the rotary electric machine 3 using the power supplied from the battery 8 based on a drive control signal output from the control device 100. The rotary electric machine 3 rotates using power provided from the battery 8 via the power conversion device 7, and rotates the differential gear 5 via the transmission 4. The differential gear 5 transmits power generated by the rotary electric machine 3 to the wheel 6. The control device 100 controls the rotary electric machine 3.

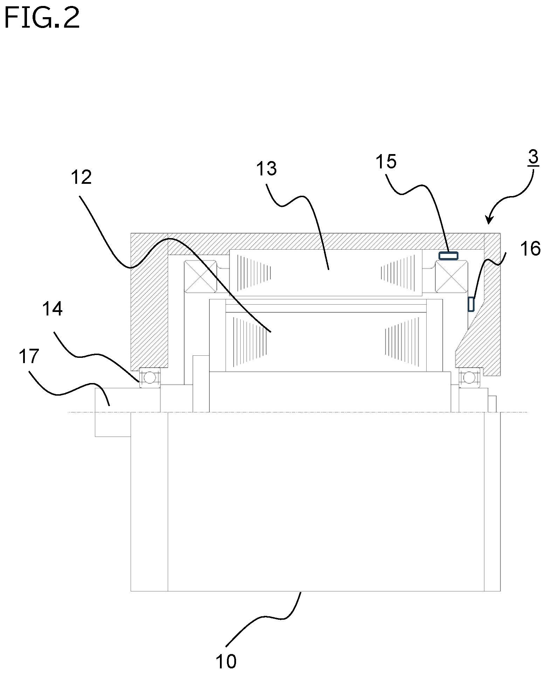

FIG. 2 is a configuration diagram of the rotary electric machine 3. The rotary electric machine 3 includes a rotor 12, a shaft 17 that is a rotation axis of the rotor 12, a bearing 14 that supports the shaft 17, a stator 13, a temperature sensor 15 that measures a temperature of the stator 13, and a housing 10 that stores the rotor 12, the stator 13, the temperature sensor 15, and the rotation sensor 16. The temperature sensor 15 is, for example, a thermistor. The temperature sensor 15 measures the temperature of a portion of the stator 13 and does not measure the temperature of whole of the stator 13 or whole of the rotary electric machine 3. The rotation sensor 16 measures the rotational speed of the rotor 12.

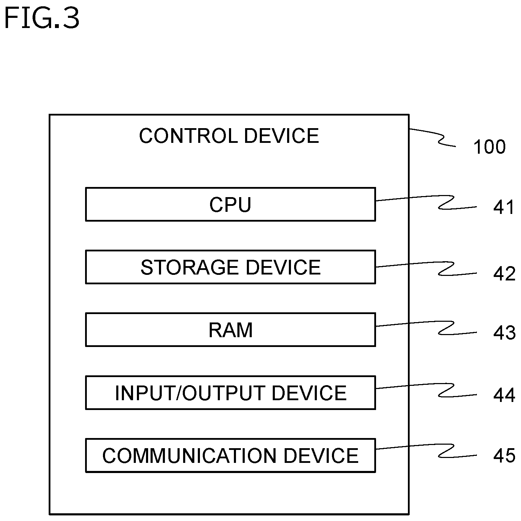

FIG. 3 is a hardware configuration diagram of the control device 100. The control device 100 includes a CPU 41 that is a central processing unit, a storage device 42 that is a nonvolatile storage device such as a flash memory, a RAM 43 that is a readable and writable storage device, an input/output device 44 that is a user interface, and a communication device 45. The CPU 41 loads a program stored in the storage device 42 into the RAM 43 and executes the program to perform the above-described various calculations. The control device 100 may be implemented by a field programmable gate array (FPGA), which is a rewritable logic circuit, or an application specific integrated circuit (ASIC), instead of the combination of the CPU 41, the storage device 42, and the RAM 43. The control device 100 may be implemented by a combination of different configurations, for example, a combination of the CPU 41, the storage device 42, the RAM 43, and an FPGA, instead of the combination of the CPU 41, the storage device 42, and the RAM 43.

The input/output device 44 is a direct or indirect point of contact with the user. Direct user contacts are, for example, a liquid crystal display and a plurality of pushbuttons. The indirect contact point with the user is, for example, a communication port that transmits and receives a signal to and from a user interface device provided in the vehicle 1 such as a touch-panel type instrument panel. The input/output device 44 is used for user setting of a recovery temperature described later. The communication device 45 realizes communication with other devices mounted on the vehicle 1, such as the temperature sensor 15, the rotation sensor 16, and the power conversion device 7.

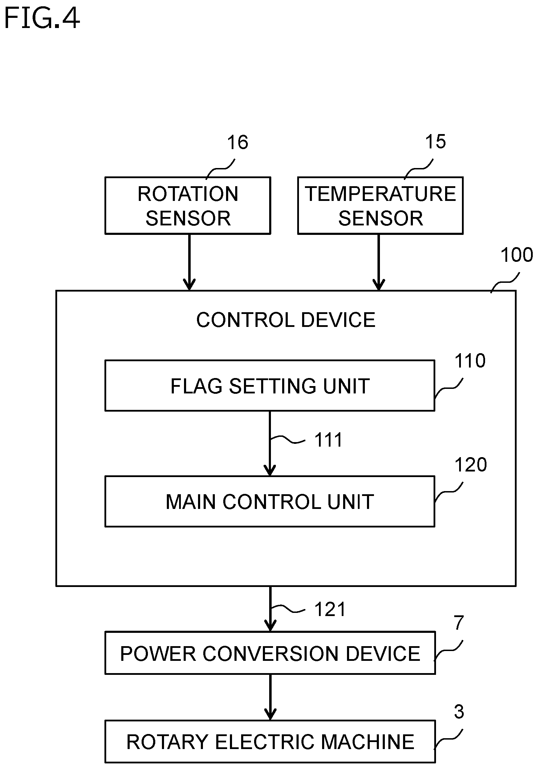

FIG. 4 is a functional configuration diagram of the control device 100. The control device 100 includes a flag setting unit 110 and a main control unit 120. The control device 100 internally holds a torque limit flag 111 indicating whether or not the rotary electric machine 3 needs to limit the torque. The torque limit flag 111 takes one of two values of ON and OFF. The initial value of the torque limit flag 111, that is, the value of the torque limit flag 111 immediately after the control device 100 is powered ON is OFF.

An output of the rotation sensor 16 and an output of the temperature sensor 15 are input to the flag setting unit 110. A depression amount of an accelerator pedal mounted on the vehicle 1 and operated by a user may be input to the main control unit 120. When an autonomous driving unit is mounted on the vehicle 1, a calculation result of the autonomous driving unit may be input to the main control unit 120.

The flag setting unit 110 sets the torque limit flag 111 by processing to be described later. The main control unit 120 calculates a drive control signal 121 to be output to the power conversion device 7. The main control unit 120 refers to the torque limit flag 111 when calculating the drive control signal 121, and calculates the drive control signal 121 such that the torque of the rotary electric machine 3 is more limited when the torque limit flag 111 is ON than when the torque limit flag 111 is OFF.

The main control unit 120 has at least the following models: a first mode and a second mode. In the first mode, when the torque limit flag 111 is OFF, the drive control signal 121 is calculated without limiting the torque, and when the torque limit flag 111 is ON, the drive signal is calculated so that the torque is equal to or less than a predetermined threshold value. In the second mode, when the torque limit flag 111 is OFF, the drive control signal 121 is calculated so that the torque is equal to or less than a predetermined first threshold, and when the torque limit flag 111 is ON, the drive control signal 121 is calculated so that the torque is equal to or less than a second threshold that is smaller than the first threshold. Whether the main control unit 120 operates in the first mode or the second mode may be set by the user using the input/output device 44, or may be set by only an expert through a special operation before shipment or at the time of inspection.

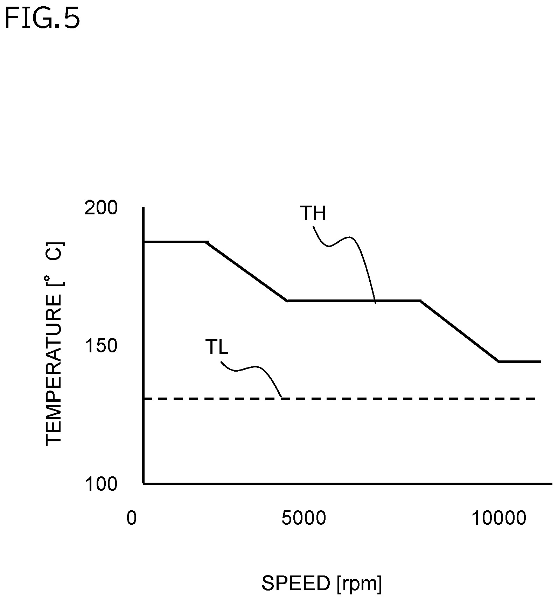

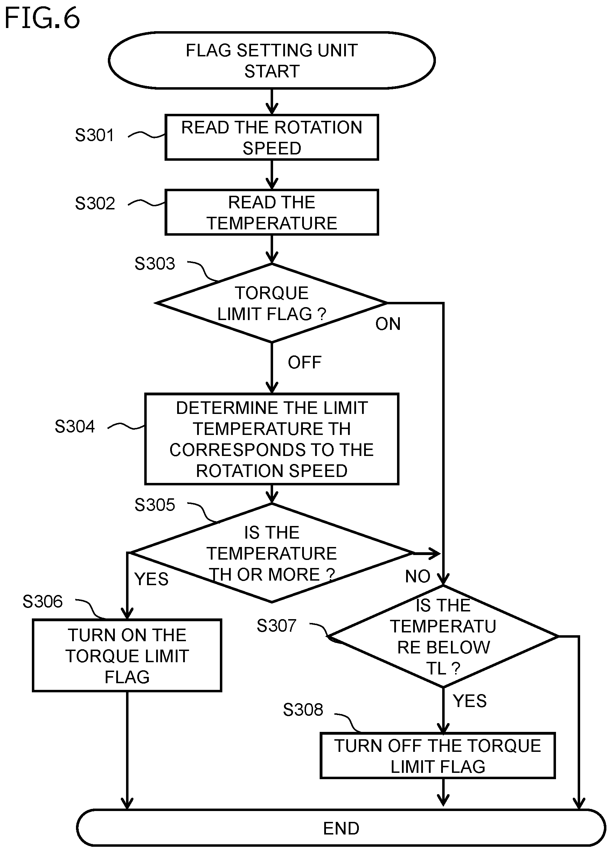

FIG. 5 is a diagram illustrating a relationship between a limit temperature TH and a recovery temperature TL. In FIG. 5, the limit temperature TH is indicated by a straight line, and the recovery temperature TL is indicated by a broken line. The horizontal axis of FIG. 5 represents the rotational speed of the rotary electric machine 3, that is, the output of the rotation sensor 16. The vertical axis of FIG. 6 represents temperature, that is, the limit temperature TH and the recovery temperature TL. The limit temperature TH decreases as the rotational speed of the rotary electric machine 3 increases. However, there is a section in which the limit temperature TH does not change even when the rotation speed of the rotary electric machine 3 increases. The relationship between the value of the limit temperature TH and the rotation speed of the rotary electric machine 3 may be expressed by a mathematical expression such as a polynomial expression or may be expressed as a lookup table. The mathematical expression and the lookup table indicating the value of the limit temperature TH are conceptually included in the flag setting unit 110, and are actually stored in the storage device 42. The recovery temperature TL has a constant value regardless of the rotation speed of the rotary electric machine 3. However, the recovery temperature TL is smaller than the limit temperature TH at the highest temperature. The value of the recovery temperature TL is conceptually included in the flag setting unit 110 and actually stored in the storage device 42.

FIG. 6 is a flowchart illustrating processing of the flag setting unit 110. As described above, the flag setting unit 110 switches the torque limit flag 111 ON and OFF. The flag setting unit 110 executes the process shown in FIG. 6 at predetermined control intervals. In step S301, the flag setting unit 110 reads the 9 of the rotary electric machine 3 output from the rotation sensor 16. In step S302, the flag setting unit 110 reads the temperature of the rotary electric machine 3 output from the temperature sensor 15. In the subsequent step S303, the flag setting unit 110 determines whether or not the torque limit flag 111 is in a state, in other words, a torque limiting state. If the flag setting unit 110 determines that the torque limit flag 111 is OFF, the process advances to step S304; otherwise, the process advances to step S307.

In step S304, the flag setting unit 110 determines the limit temperature TH corresponding to the rotational speed read in step S301. As described with reference to FIG. 5, this determination may be performed by performing a predetermined calculation or referring to a lookup table created in advance. In step S305, the flag setting unit 110 determines whether the temperature read in step S302 is equal to or higher than the limit temperature TH determined in step S304. When the flag setting unit 110 determines that the temperature is equal to or higher than the limit temperature TH, the process proceeds to step S306. When the flag setting unit 110 determines that the temperature is lower than the limit threshold, the process proceeds to step S307.

In step S306, the flag setting unit 110 turns on the torque limit flag 111 and ends the processing illustrated in FIG. 6. In step S307, the flag setting unit 110 determines whether the temperature read in step S302 is equal to or lower than a predetermined recovery temperature TL. If the flag setting unit 110 determines that the temperature is lower than the recovery temperature TL, the process proceeds to step S308. If the flag setting unit 110 determines that the temperature is equal to or higher than the recovery temperature TL, the process illustrated in FIG. 6 ends without changing the torque limit flag 111. In step S308, the flag setting unit 110 turns off the torque limit flag 111 and ends the processing illustrated in FIG. 6.

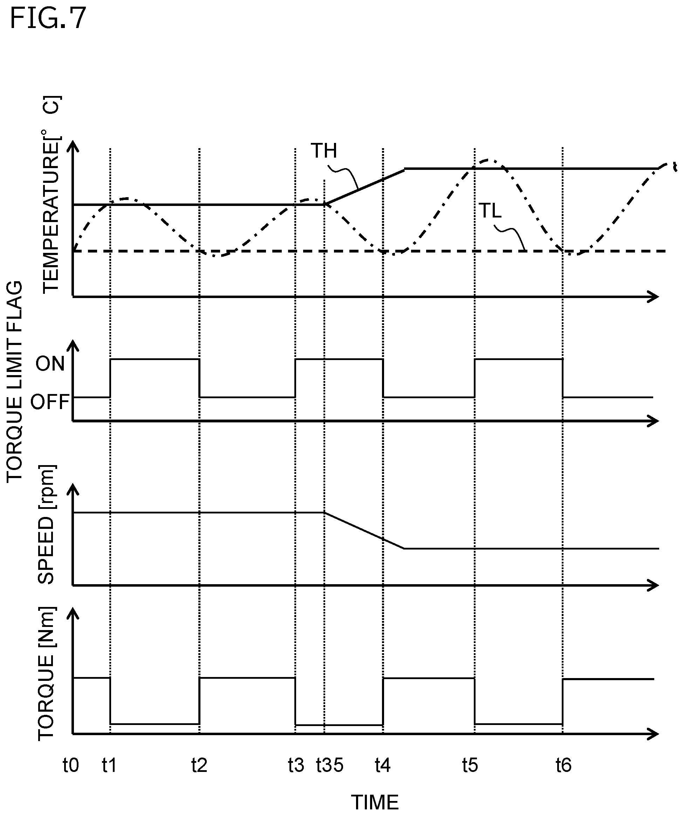

FIG. 7 is a diagram illustrating an operation example of the control device 100. In FIG. 7, time elapses from left to right in the drawing. In FIG. 7, four graphs are vertically arranged, and show time-series changes of the temperature of the rotary electric machine 3, the torque limit flag 111, the rotation speed of the rotary electric machine 3, and torque of the rotary electric machine 3 in order from top to bottom. These four graphs are synchronized in time. The times t0 to t6 shown in the lower part of FIG. 7 are described for convenience of explanation. The time t35 is a time between the time t3 and the time t4.

First, the change in the rotation speed shown in the third row will be described. For a while from time t0, the rotation speed is constant at a relatively high value, and at time t35 after time t3, the operating point is changed and the rotation speed starts to decrease. This change in the operating point is caused, for example, by a decrease in the amount of depression of the accelerator pedal by the user. The decrease in the rotation speed continues even at time t4, and the decrease in the rotation speed stops after time t4. After time t5, the rotation speed is constant at a relatively low value. As described with reference to FIG. 5, the rotation speed of the rotary electric machine 3 affects the value of limit temperature TH.

In the graph showing the temperature change shown in the first row of FIG. 7, a straight line indicates the limit temperature TH, a broken line indicates the recovery temperature TL, and a one-dot chain line indicates the temperature of the rotary electric machine 3. The limit temperature TH is constant until around time t3 when the rotation speed does not change. The limit temperature TH has an increase/decrease tendency opposite to that of the rotation speed, and thus increases with time after time t35. The increase in the limit temperature TH continues until after time t4, and becomes constant after time t5. The recovery temperature TL has no correlation with the rotation speed and is always a constant value.

The temperature of the rotary electric machine 3 exceeded the limit temperature TH at time t1, fell below the recovery temperature TL at time t2, exceeded the limit temperature TH at time t3, fell below the recovery temperature TL at time t4, exceeded the limit temperature TH at time t5, and fell below the recovery temperature TL at time t6. Therefore, the value of the torque limit flag 111 shown in the second row is ON at time t1 to t2, OFF at time t2 to t3, ON at time t3 to t4, OFF at time t4 to t5, ON at time t5 to t6, and OFF after time t6.

The torque shown in the bottom row of FIG. 7 is limited to a low value during a time period in which the torque limit flag 111 is ON, and can be set to a higher value during a time period in which the torque limit flag 111 is OFF. Therefore, the torque is opposite to that of the torque limit flag 111 shown in the second row. Specifically, time t1 to t2 has a low value, time t2 to t3 has a high value, time t3 to t4 has a low value, time t4 to t5 has a high value, time t5 to t6 has a low value, and time t6 and thereafter has a high value. In the example illustrated in FIG. 7, the time period from time t1 to time t2, the time period from time t2 to time t3, the time period from time t3 to time t4, the time period from time t4 to time t5, and the time period from time t5 to time t6 are substantially equal in length.

### (Comparative Example)

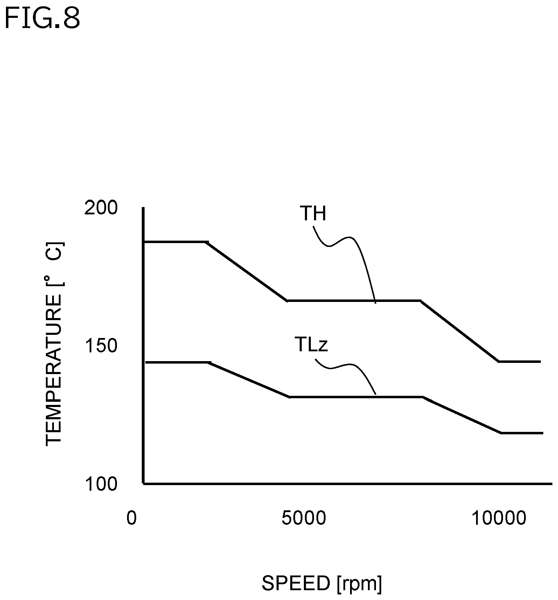

FIG. 8 is a diagram illustrating a relationship between the limit temperature TH and the comparative example recovery temperature TLz in the comparative example. FIG. 8 corresponds to FIG. 5 of the present embodiment. The characteristics of the limit temperature TH are the same as those of the present embodiment. The comparative example recovery temperature TLz is not constant and decreases as the rotational speed increases. However, the limit temperature TH and the comparative example recovery temperature TLz may have different temperature changes with respect to an increase in the rotation speed. Further, the range of the rotation speed in which the limit temperature TH does not change may be different from the range of the rotation speed in which the comparative example recovery temperature TLz does not change.

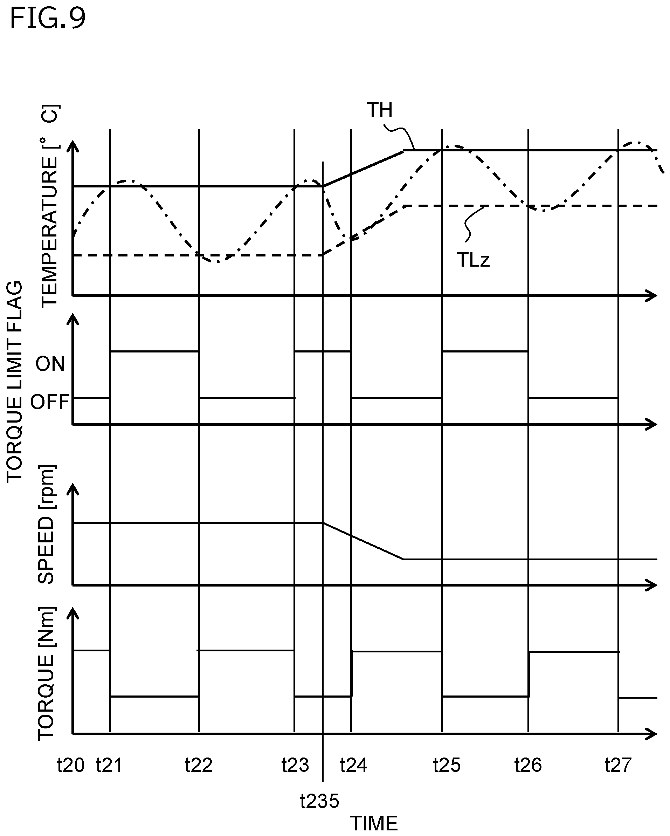

FIG. 9 is a diagram illustrating an operation example in the comparative example. FIG. 9 corresponds to FIG. 7 of the present embodiment. The four graphs shown in FIG. 9 are the same as those in FIG. 7. The times t20 to t27 shown at the lower end of FIG. 9 are described for convenience of description. In FIG. 9, the rotation speed is constant at a relatively high value for a while from time t20, and after time t235, the operating point is changed and the rotation speed starts to decrease. The decrease in the rotation speed continues even at time t24, and the decrease in the rotation speed stops after time t24. After time t25, the rotation speed is constant at a relatively low value.

In the graph showing the temperature change shown in the first row of FIG. 9, a straight line indicates the limit temperature TH, a broken line indicates the comparative example recovery temperature TLz, and a one-dot chain line indicates the temperature of the rotary electric machine 3. The limit temperature TH and the comparative example recovery temperature TLz are constant until time t235 when the rotation speed does not change. The limit temperature TH and the comparative example recovery temperature TLz have an increase/decrease tendency opposite to that of the rotation speed, and thus increase with time after time t235. The increase in the limit temperature TH and the comparative example recovery temperature TLz continues until after time t24, and becomes constant after time t25. Unlike FIG. 7, when the rotation speed changes, the comparative example recovery temperature TLz also changes similarly to the limit temperature TH.

The temperature of the rotary electric machine 3 exceeded the limit temperature TH at time t21, fell below the comparative example recovery temperature TLz at time t22, exceeded the limit temperature TH at time t23, fell below the comparative example recovery temperature TLz at time t24, exceeded the limit temperature TH at time t25, and fell below the comparative example recovery temperature TLz at time t26. Therefore, the value of the torque limit flag 111 shown in the second row is ON at time t21 to t22, OFF at time t22 to t23, ON at time t23 to t24, OFF at time t24 to t25, ON at time t25 to t26, and OFF after time t26.

The torque shown in the bottom row of FIG. 9 is limited to a low value during a time period in which the torque limit flag 111 is ON, and can be set to a higher value during a time period in which the torque limit flag 111 is OFF. Therefore, the torque is opposite to that of the torque limit flag 111 shown in the second row. Specifically, time t21 to t22 has a low value, time t22 to t23 has a high value, time t23 to t24 has a low value, time t24 to t25 has a high value, time t25 to t26 has a low value, and time t26 and thereafter has a high value.

In the present comparative example, since the rotation speed at time t24 is lower than that at time t23, the value of the comparative example recovery temperature TLz is larger than that at time t23. Therefore, the period from time t23 to time t24 is shorter than the period from time t21 to time t22 and the period from time t25 to time t26. That is, during the period from time t23 to time t24, the torque limitation ends in a short period of time, and thus sudden acceleration, which is a behavior of the vehicle 1 unintended by the user, occurs. On the other hand, in the operation example of the present embodiment shown in FIG. 7, even if the operating point is changed, the time period in which the torque limit flag 111 is OFF is not shortened. Therefore, it can be said that the behavior of the vehicle 1 that is unintended by the user can be suppressed in the present embodiment.

According to the first embodiment described above, the following effects can be obtained.
(1) The control device 100 controls at least the output torque of the rotary electric machine 3. The control device 100 includes the flag setting unit 110 that sets the necessity of limiting the output torque as the torque limit flag 111, and the main control unit 120 that controls the output torque based on the torque limit flag 111. When the temperature of the rotary electric machine 3 exceeds the temperature upper limit, that is, the limit temperature TH set based on the rotation speed of the rotary electric machine 3, the flag setting unit 110 turns on the torque limit flag 111. The flag setting unit 110 turns off the torque limit flag 111 when the temperature of the rotary electric machine 3 falls below the recovery temperature TL which is predetermined. When the torque limit flag 111 is ON, the main control unit 120 controls the output to be smaller than when the torque limit flag 111 is OFF. Therefore, as can be seen from the operation example of the present embodiment illustrated in FIG. 7 and the operation example of the comparative example illustrated in FIG. 9, the control device 100 of the present embodiment can suppress unintended behavior of the vehicle when the operating point is changed.
(2) In the first mode, the main control unit 120 does not limit the output torque when the torque limit flag 111 is OFF, and limits the output torque when the torque limit flag 111 is ON.
(3) In the second mode, the main control unit 120 limits the output torque to a first torque when the torque limit flag 111 is OFF, and limits the output torque to a second torque smaller than the first torque when the torque limit flag 111 is ON.

### (Modification 1)

In the first embodiment described above, the main control unit 120 calculates the drive control signal 121 by referring to the torque limit flag 111 set by the flag setting unit 110. However, management of the flag is not an essential configuration, and the flag may be managed in another format as long as it has the same meaning as the torque limit flag 111. For example, the flag setting unit 110 may manage the state transition such that the rotary electric machine 3 is in the "unrestricted state" when the torque limit flag 111 is OFF and the rotary electric machine 3 is in the "restricted state" when torque limit flag 111 is ON. In this case, the main control unit 120 calculates the drive control signal 121 by referring to the state of the rotary electric machine 3.

### (Modification 2)

In the first embodiment described above, the vehicle 1 has been described as a series hybrid vehicle. However, the configuration of the vehicle 1 is not limited thereto. The vehicle 1 may adopt a parallel system or a split system, or may be an electric vehicle without the engine 2.

### (Modification 3)

In the first embodiment described above, the main control unit 120 has both the first mode and the second mode. However, the main control unit 120 may have only one of the first mode and the second mode.

### -Second Embodiment-

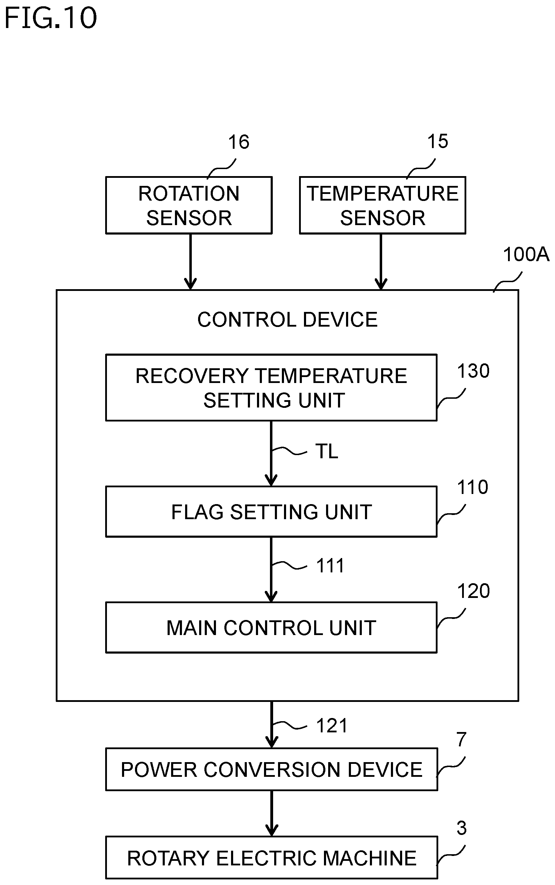

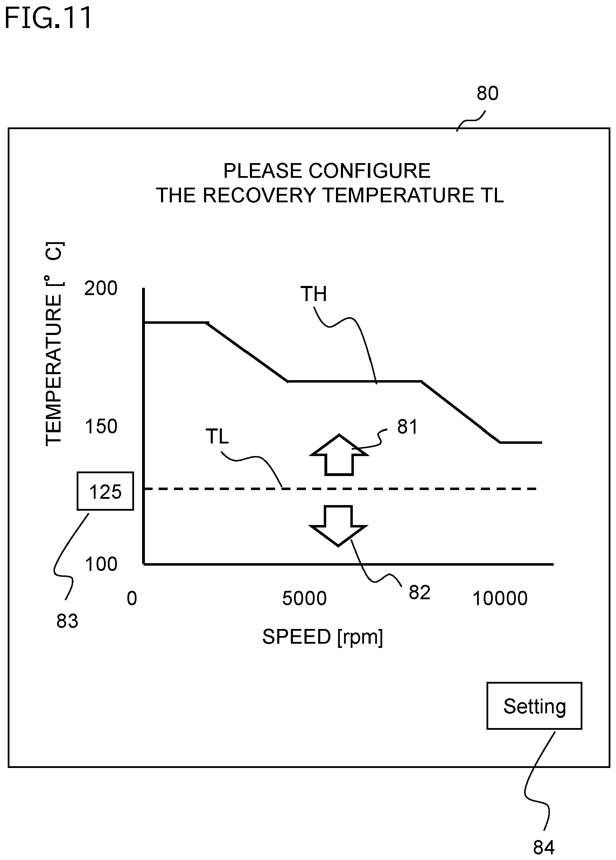

A second embodiment of the rotary electric machine control device and control method will be described with reference to FIGS. 10 and 11. In the following description, the same components as those of the first embodiment are denoted by the same reference numerals, and differences will be mainly described. Points not particularly described are the same as those in the first embodiment. The present embodiment is different from the first embodiment mainly in that the user can set the recovery temperature TL.

FIG. 10 is a functional configuration diagram of the control device 100A according to the second embodiment. Comparing FIG. 10 with FIG. 4 in the first embodiment, the recovery temperature setting unit 130 is added. The recovery temperature setting unit 130 determines the recovery temperature TL based on a user operation and outputs the recovery temperature TL to the flag setting unit 110.

FIG. 11 is a diagram illustrating a setting screen 80 of the recovery temperature TL operated by the user. Drawing of the setting screen 80, control of the user interface described below, and writing to the storage device 42 are performed by the recovery temperature setting unit 130. The setting screen 80 is similar to FIG. 5 in the first embodiment, and includes an up arrow 81, a down arrow 82, a numeric input field 83, and a setting button 84, which are not shown in FIG. 5. The user can increase or decrease the value of the recovery temperature TL by a predetermined value unit, for example, by 1 unit using the up arrow 81 and the down arrow 82. The user can also directly input a numerical value to the numeric input field 83. When the user presses the setting button 84, the set value is written to the storage device 42 as the recovery temperature TL. Since the flag setting unit 110 reads the value of the recovery temperature TL from the storage device 42, the recovery temperature setting unit 130 writes the value of the recovery temperature TL in the storage device 42, thereby indirectly passing the value of the recovery temperature TL to the flag setting unit 110.

According to the second embodiment described above, the following effects can be obtained.
(4) The control device 100A includes the recovery temperature setting unit 130 that sets the recovery temperature TL based on an external command. Therefore, the user can set a desired recovery temperature TL.

In each of the above-described embodiments and modifications, the configuration of the functional block is merely an example. Some functional configurations illustrated as separate functional blocks may be integrally configured, or a configuration represented by one functional block diagram may be divided into two or more functions. Further, a part of the functions of each functional block may be included in another functional block.

In each of the above-described embodiments and modifications, the control device 100 may include an input/output interface (not illustrated), and a program may be read from another device via a medium that can be used by the input/output interface and the control device 100 when necessary. Here, the medium refers to, for example, a storage medium attachable to and detachable from an input/output interface, or a communication medium, that is, a wired, wireless, or optical network, or a carrier wave or a digital signal propagating through the network. Some or all of the functions implemented by the program may be implemented by a hardware circuit or an FPGA.

The above-described embodiments and modifications may be combined with each other. Although various embodiments and modifications have been described above, the present invention is not limited to these contents. Other embodiments conceivable within the scope of the technical idea of the present invention are also included in the scope of the present invention.

### Reference Signs List

- 1 :: Vehicle
- 3 :: Rotary electric machine
- 15 :: Temperature sensor
- 16 :: Rotation sensor
- 100, 100A:: Control device
- 110 :: Flag setting unit
- 111 :: Torque limit flag
- 120 :: Main control unit
- TH :: Limit temperature
- TL :: Recovery temperature

## Claims

1. A control device for a rotary electric machine for controlling an output torque of the rotary electric machine, comprising:
a flag setting unit for setting a limit flag indicating whether or not the output torque needs to be restricted; and
a main control unit for controlling the output torque based on the limit flag,
wherein the flag setting unit changes the limit flag to ON when a temperature of the rotary electric machine exceeds a limit temperature which is a temperature upper limit value set based on a rotation speed of the rotary electric machine, and
wherein the flag setting unit changes the limit flag to OFF when the temperature of the rotary electric machine falls below a recovery temperature which is predetermined, and
wherein the main control unit controls the output torque to be smaller in a case where the limit flag is ON than in a case where the limit flag is OFF.

2. The control device for the rotary electric machine according to claim 1,
wherein the main control unit does not limit the output torque when the limit flag is OFF, and limits the output torque when the limit flag is ON.

3. The control device for the rotary electric machine according to claim 1,
wherein the main control unit is configured to limit the output torque to a first torque when the limit flag is OFF, and to limit the output torque to a second torque smaller than the first torque when the limit flag is ON.

4. The control device for the rotary electric machine according to claim 1, further comprising a recovery temperature setting unit configured to set the recovery temperature based on an external command.

5. A control method for a rotary electric machine for controlling an output torque of the rotary electric machine by a computer, comprising:
when a temperature of the rotary electric machine exceeds a limit temperature which is a temperature upper limit value set based on a rotational speed of the rotary electric machine, a limit flag indicating whether or not the output torque needs to be limited is changed to ON; and
changing the limit flag to OFF when the temperature of the rotary electric machine falls below a predetermined recovery temperature; and
controlling the output torque of the rotary electric machine to be smaller in a case where the limit flag is ON than in a case where the limit flag is OFF.

6. The control device for the rotary electric machine according to claim 1,
wherein the recovery temperature is a constant value regardless of a rotation speed of the rotary electric machine.
